# EUROPEAN PATENT APPLICATION

(11) **EP 4 836 081 A1**
(43) Date of publication of application: **04.11.2026**
(21) Application number: 24910489.4
(22) Date of filing: 27.11.2024
(51) Int. Cl.: H01M 10/613

(54) **BATTERY ASSEMBLY AND VEHICLE HAVING SAME**

(30) Priority: 29.12.2023 CN 202311871296
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: CHEN, Boyan, Hangzhou, Zhejiang 310051 (CN); ZHAO, Qun, Hangzhou, Zhejiang 310051 (CN); ZHOU, Wei, Hangzhou, Zhejiang 310051 (CN); GUO, Mengmeng, Hangzhou, Zhejiang 310051 (CN); XING, Yugang, Hangzhou, Zhejiang 310051 (CN); ZOU, Jin, Hangzhou, Zhejiang 310051 (CN)
(74) Representative: Range, Christopher William
(86) International application number: PCT/CN2024/134863
(87) International publication number: WO 2025/139556

(57) **Abstract**

A battery assembly and a vehicle having same. The battery assembly comprises: battery packs (2), the battery packs (2) being arranged in sequence in a first direction, and each battery pack (2) being provided with multiple battery cells (60) arranged in sequence in a second direction; a heat exchange plate (1) is provided with a water inlet (10), a water outlet (20), a water inlet flow path in communication with the water inlet (10), and a water outlet flow path in communication with the water outlet (20); the heat exchange plate (1) is provided with heat exchange areas corresponding to the multiple battery packs (2); multiple branch flow paths corresponding to each of battery packs (2) are arranged in the heat exchange areas, the upstream end of each branch flow path is communicated with the water inlet flow path, and the downstream end of each branch flow path is communicated with the water outlet flow path.

## Description

### CROSS-REFERENCE TO RELATED APPLICATION

This application is based on and claims priority to Chinese patent application No. 202311871296.X filed on December 29, 2023, the entire contents of which are incorporated herein by reference.

### FIELD

The present disclosure relates to, but is not limited to, the field of battery assemblies, and more particularly, to a battery assembly and a vehicle having same.

### BACKGROUND

In the related art, a battery assembly includes a heat exchange plate and a plurality of battery cells. The heat exchange plate is adapted to be in contact with the plurality of battery cells to cool or heat the plurality of battery cells. In the existing technology, multiple cooling regions are disposed inside the heat exchange plate. Each cooling region has a cooling channel. In addition, multiple cooling channels are independent from each other. In this way, a situation where a coolant is heated in a flow direction during charging and discharging of a battery system can be avoided, ensuring temperature consistency of an entire battery pack. However, in the above arrangement, a heat exchange efficiency of the heat exchange plate for the battery pack is relatively low, which may lead to poor operation stability of the battery assembly.

### SUMMARY

An overview of a subject matter described in detail in the specification is provided below. This overview is not intended to limit the protection scope of the claims.

An objective of the present disclosure is to provide a battery assembly, which can improve a heat exchange performance of a battery pack, enable a temperature of the battery pack to be more stable during operation, and thus enhance operation stability of the battery assembly.

Another objective of the present disclosure is to provide a vehicle.

The battery assembly according to the present disclosure includes: a plurality of battery packs arranged sequentially in a first direction, each of the plurality of battery packs being provided with a plurality of battery cells arranged sequentially in a second direction; and a heat exchange plate, the heat exchange plate having a water inlet, a water outlet, a water inflow path in communication with the water inlet, and a water outflow path in communication with the water outlet. The heat exchange plate has heat exchange regions corresponding to the plurality of battery packs. A plurality of branch flow paths are arranged in each of the heat exchange regions and correspond to each of the plurality of battery packs. Each of the plurality of branch flow paths has an upstream end in communication with the water inflow path, and a downstream end in communication with the water outflow path.

With the battery assembly according to the present disclosure, the heat exchange plate of the battery assembly has a plurality of heat exchange regions. One of the plurality of heat exchange regions is arranged corresponding to the plurality of battery packs. In addition, a plurality of branch flow paths correspond to one of the plurality of battery packs. Each of the plurality of branch flow paths is adapted to heat or cool the battery pack, improving the heat exchange performance of the battery pack. Therefore, the temperature of the battery pack can be more stable during operation, enhancing the operation stability of the battery assembly.

The vehicle according to the present disclosure includes the above battery assembly.

The vehicle according to the present disclosure has good operation stability, which can result in excellent power performance of the vehicle.

Additional aspects and advantages of the present disclosure will be provided at least in part in the following description, or will become apparent at least in part from the following description, or can be learned from practicing of the present disclosure.

Other aspects can be understood after reading and comprehending the accompanying drawings and detailed description.

### BRIEF DESCRIPTION OF THE DRAWINGS

FIG. 1 is a schematic diagram of a water outflow path, a water inflow path, a branch flow path, and a battery assembly according to an embodiment of the present disclosure.
FIG. 2 is a front view of a heat exchange plate according to an embodiment of the present disclosure.
FIG. 3 is a schematic diagram of a first heat exchange region according to an embodiment of the present disclosure.
FIG. 4 is a schematic diagram of a second heat exchange region according to an embodiment of the present disclosure.
FIG. 5 is a schematic diagram of a third heat exchange region according to an embodiment of the present disclosure.
FIG. 6 is a schematic diagram of a fourth heat exchange region according to an embodiment of the present disclosure.
FIG. 7 is a schematic diagram of a battery pack and a heat exchange plate according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are only intended to explain, rather than limit, the present disclosure.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," and "anti-clockwise" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, the terms such as "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, unless otherwise specifically defined.

In the present disclosure, unless otherwise clearly specified and limited, terms, such as "mount" "connect" "connect to" and "fixed to" should be understood in a broad sense. An an example, it may be a fixed connection, a detachable connection, or an integral connection; mechanical connection, electrical connection, or mutual communication; direct connection or indirect connection through an intermediate; or internal communication of two components or the interaction relationship between two components. For those skilled in the art, specific meanings of the above-mentioned terms in the present disclosure can be understood according to specific circumstances.

In the present disclosure, unless otherwise clearly specified and limited, the first feature being "above" or "below" the second feature may mean that the first feature is in direct contact with the second feature, or the first and second features are in indirect contact via another feature disposed therebetween. In addition, the first feature being "above" the second feature may mean that the first feature is directly above or obliquely above the second feature, or simply mean that the level of the first feature is higher than that of the second feature. The first feature being "below" the second feature may mean that the first feature is directly below or obliquely below the second feature, or simply mean that the level of the first feature is smaller than that of the second feature.

In the related art, a battery assembly includes a heat exchange plate and a plurality of battery cells. The heat exchange plate is adapted to be in contact with the plurality of battery cells to cool or heat the plurality of battery cells. In the existing technology, multiple cooling regions are arranged inside the heat exchange plate. Each cooling region has a cooling channel. In addition, multiple cooling channels are independent from each other. In this way, a situation where a coolant is heated in a flow direction during charging and discharging of a battery system can be avoided, ensuring temperature consistency of an entire battery pack. However, in the above arrangement, a heat exchange efficiency of the heat exchange plate for the battery pack is relatively lower, which may lead to poor operation stability of the battery assembly.

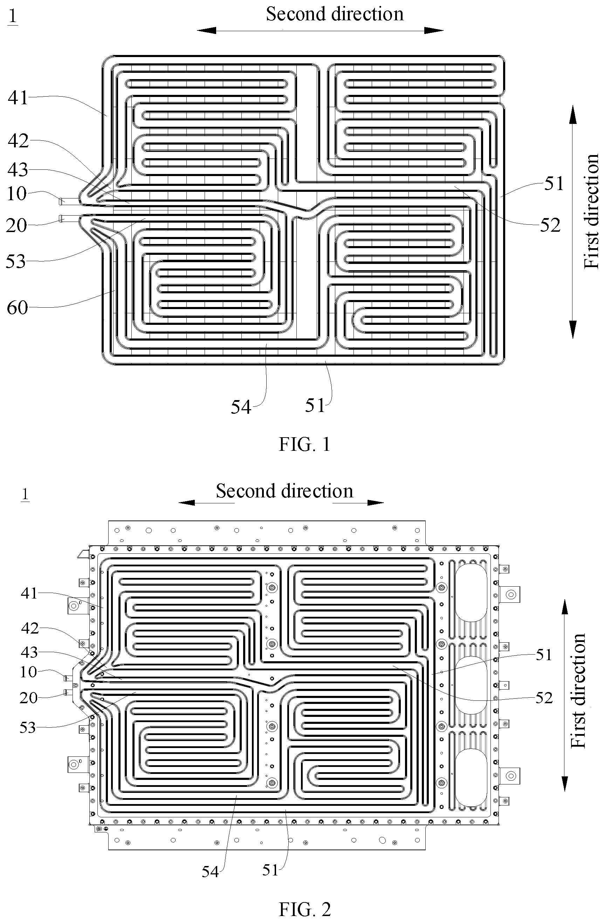

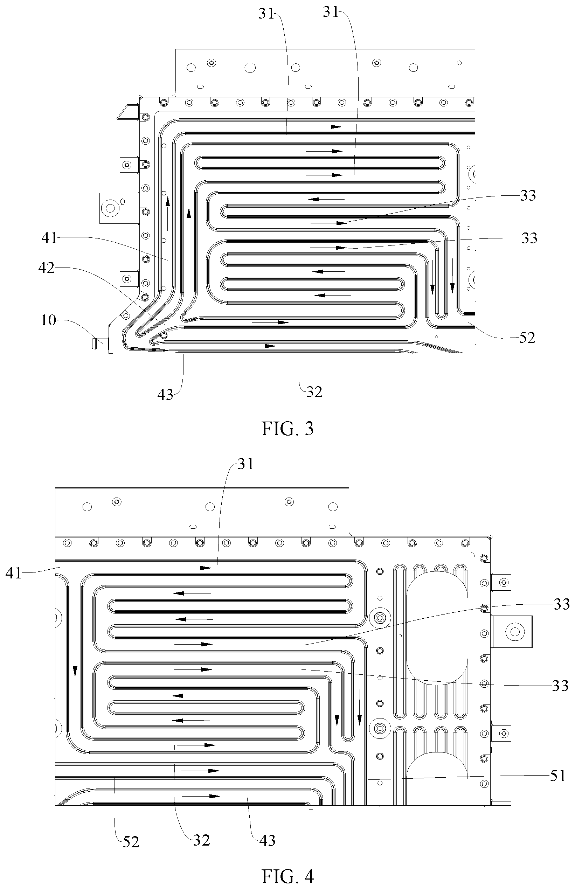

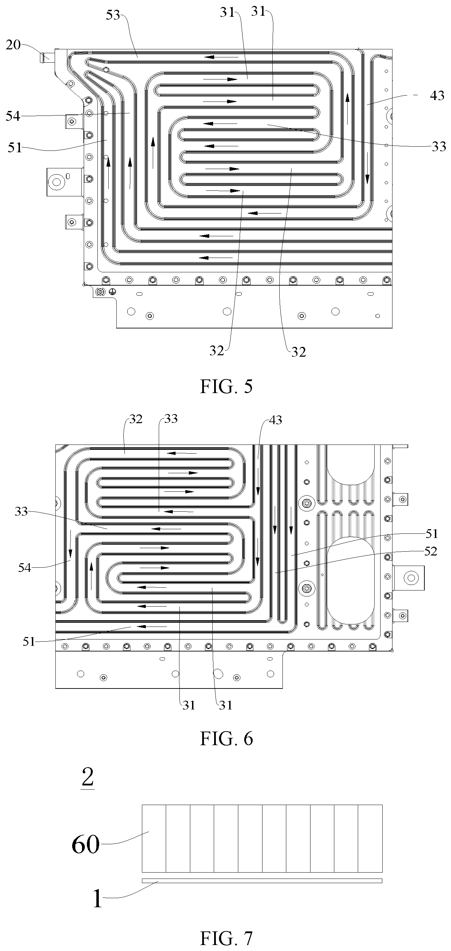

The battery assembly according to the embodiments of the present disclosure is described below with reference to FIG. 1 to FIG. 7.

As illustrated in FIG. 1 to FIG. 7, the battery assembly according to the present disclosure includes a battery pack 2 and a heat exchange plate 1. The battery pack 2 is configured as a plurality of battery packs 2 arranged sequentially in a first direction. Each of the plurality of battery packs 2 is provided with a plurality of battery cells 60 arranged sequentially in a second direction. The heat exchange plate 1 has a water inlet 10, a water outlet 20, a water inflow path in communication with the water inlet 10, and a water outflow path in communication with the water outlet 20. The heat exchange plate 1 has heat exchange regions corresponding to the plurality of battery packs 2. A plurality of branch flow paths are arranged in each of the heat exchange regions and correspond to each of the plurality of battery packs 2. Each of the plurality of branch flow paths has an upstream end in communication with the water inflow path, and a downstream end in communication with the water outflow path.

In some embodiments, the first direction may be configured as a length direction of the battery assembly. The second direction may be configured as a width direction of the battery assembly. A third direction may be configured as a height direction of the battery assembly. A plurality of battery cells 60 are arranged sequentially in the second direction to be configured as a battery pack 2. The battery assembly includes the plurality of battery packs 2. The plurality of battery packs 2 are arranged sequentially in the second direction. The battery assembly further includes the heat exchange plate 1 disposed at a side of each of the plurality of battery packs 2 in the third direction. In addition, each of the plurality of battery cells 60 abuts against the heat exchange plate 1 to allow the heat exchange plate 1 to heat or cool the plurality of battery cells 60. A plurality of heat exchange regions are formed inside the heat exchange plate 1. One of the plurality of heat exchange regions is arranged corresponding to the plurality of battery packs 2. The plurality of branch flow paths are formed inside each heat exchange region. One battery pack 2 is arranged corresponding to the plurality of branch flow paths. The water inflow path and the water outflow path are formed inside the heat exchange plate 1. The heat exchange plate 1 further has the water inlet 10 and the water outlet 20. The water inflow path has an end in communication with the water inlet 10, and the other end in communication with the upstream end of the branch flow path. The water outflow path has an end in communication with the water outlet 20, and the other end in communication with the downstream end of the branch flow path.

It should be understood that a coolant flows out from the water outlet 20 after flowing through the water inlet 10, the water inflow path, the branch flow path, and the water outflow path in sequence. The coolant performs heat exchange on the plurality of battery cells 60 during flow. One heat exchange region corresponds to the plurality of battery packs 2. In addition, one battery pack 2 corresponds to the plurality of branch flow paths. Coolants flowing in the plurality of branch flow paths may all perform heat exchange on the battery pack 2, improving the heat exchange performance of the battery pack 2. It is worth mentioning that during operation of the battery pack 2, an operating temperature of the battery pack 2 may affect an operating efficiency of the battery pack 2. Therefore, by the above arrangement, a temperature of the battery pack 2 during operation can be more stable, stabilizing the operating efficiency of the battery pack 2, and thus improving operation stability of the battery assembly.

With the battery assembly involved in the present disclosure, the heat exchange plate 1 thereof has the plurality of heat exchange regions. One of the plurality of heat exchange regions is arranged corresponding to the plurality of battery packs 2. In addition, one of the plurality of battery packs 2 corresponds to the plurality of branch flow paths. Each of the plurality of branch flow paths is adapted to heat or cool the battery pack 2, improving the heat exchange performance of the battery pack 2. Therefore, the temperature of the battery pack 2 can be more stable during operation, enhancing the operation stability of the battery assembly.

According to some embodiments of the present disclosure, as illustrated in FIG. 1 to FIG. 5, in one of the heat exchange regions, the plurality of branch flow paths each extend in the second direction and are arranged at intervals in the first direction. A coolant in at least one of the plurality of branch flow paths flows in a first flow direction. A coolant in at least another one of the plurality of branch flow paths flows in a second flow direction. The first flow direction is opposite to the second flow direction.

In some embodiments, the branch flow path extends in the second direction. In addition, the plurality of branch flow paths are arranged at intervals in the first direction. It should be understood that the coolant enters from the water inlet 10, flows through the water inflow path, the branch flow path, and the water outflow path in sequence, and is then discharged from the water outlet 20. The coolant performs heat exchange on the battery pack 2 during the flow. Therefore, as the coolant flows, a heat loss of the coolant gradually increases, which may reduce a heat exchange performance on the battery cell 60. By allowing the coolant to flow in the first flow direction in some branch flow paths and to flow in the second flow direction in some other branch flow paths, with the first flow direction opposite to the second flow direction, a phenomenon that some of the battery cells 60 in the heat exchange region exhibit favorable heat exchange performance while others have a poor heat exchange performance can be avoided. In this way, it enables heat exchange between the heat exchange plate 1 and the plurality of battery cells 60 in the heat exchange region to be more balanced.

In some embodiments, in one of the heat exchange regions, at least some of adjacent branch flow paths have opposite flow directions and are in communication with each other. Therefore, by the above arrangement, the coolant can flow continuously in the heat exchange region, which can prevent the coolant from directly flowing into the water outflow path after flowing through one branch flow path, prolonging a residence duration of the coolant in the heat exchange region and improving a utilization rate of the coolant.

According to some embodiments of the present disclosure, as illustrated in FIG. 1 to FIG. 6, a quantity of the branch flow paths in which the coolant flows in the first flow direction is i1, and a quantity of the branch flow paths in which the coolant flows in the second flow direction is i2, where 0.3≤i1/i2≤1.

In some embodiments, at least some of the adjacent branch flow paths have the same flow direction, and the at least some of the adjacent branch flow paths have opposite flow directions. As an example, among four branch flow paths arranged sequentially in the first direction, the branch flow paths located on two sides of the first direction are configured as a first flow channel and a second flow channel, respectively. The two branch flow paths located between the first flow channel and the second flow channel are configured as third flow channels, respectively. A coolant in the two third flow channels flows in the first flow direction. The coolant in the first flow channel and the second flow channel flows in the second flow direction. The two third flow channels each have an end on one side in communication with the first flow channel, and the other end on the other side in communication with the second flow channel, where 0.3≤i1/i2≤1, without limitation herein. Therefore, by the above arrangement, the plurality of branch flow paths can be connected in series and/or in parallel with each other, prolonging the residence duration of the coolant in the heat exchange region and improving the heat exchange performance of the coolant on the battery pack 2. Also, it should be understood that if the coolants all flow in the first flow direction or the second flow direction, a heat exchange performance of the coolant may gradually decrease in a flow direction of the coolant, resulting in the phenomenon that some battery cells 60 in one battery pack 2 have the good heat exchange performance while others have the poor heat exchange performance. Therefore, by allowing the coolant to flow in the first flow direction or the second flow direction through the respective one among the plurality of branch flow paths, more balanced heat exchange for the plurality of battery cells 60 of the battery pack 2 can be achieved, improving the heat exchange performance of the battery pack 2, and stabilizing the temperature of the battery pack 2 during operation. In this way, the operating efficiency of the battery pack 2 can be better stabilized, further enhancing the operation stability of the battery assembly.

According to some embodiments of the present disclosure, as illustrated in FIG. 1 to FIG. 6, the plurality of branch flow paths include: a first branch flow path 31, a second branch flow path 32, and a third branch flow path 33. The first branch flow path 31 and the second branch flow path 32 are disposed on two sides of each of the heat exchange regions in the first direction, respectively. A plurality of third branch flow paths 33 are provided to be in communication with each other. In addition, the plurality of third branch flow paths are disposed between the first branch flow path 31 and the second branch flow path 32. The first branch flow path 31 is in communication with the second branch flow path 32 via the plurality of third branch flow paths 33. In at least one of the heat exchange regions, the first branch flow path 31 is in communication with the water inflow path. The second branch flow path 32 is in communication with the water outflow path; and/or each of the first branch flow path 31 and the second branch flow path 32 located in at least one of the heat exchange regions is in communication with the water inflow path, and at least one of the plurality of third branch flow paths 33 is in communication with the water outflow path.

In some embodiments, in the plurality of heat exchange regions, an end of the first branch flow path 31 and an end of the second branch flow path 32 in the at least one of the heat exchange regions are in communication with the water inflow path. The other end of the first branch flow path 31 and the other end of the second branch flow path 32 are in communication with at least one of the plurality of third branch flow paths 33, respectively. Among the plurality of third branch flow paths 33, a third branch flow path 33 in communication with the first branch flow path 31 and a third branch flow path 33 in communication with the second branch flow path 32 are in communication with the water outflow path, respectively. Alternatively, one of the plurality of third branch flow paths 33 has an end in communication with each of the first branch flow path 31 and the second branch flow path 32, and the other end in communication with the water outflow path. The present disclosure is not limited in this regard.

It should be understood that, in one heat exchange region, a part of the battery pack 2 adjacent to an outer periphery of the heat exchange region is configured as an edge portion. Since the edge portion has a larger contact area with an external environment, when the plurality of battery packs 2 are heated by the heat exchange plate 1, the edge portion has a larger heat loss, resulting in a lower heating efficiency of the heat exchange plate 1 for the battery pack 2. When the heat exchange plate 1 is adapted to perform heating on the battery pack 2, the coolant starts to heat the plurality of battery assemblies corresponding to the heat exchange regions through the first branch flow path 31 and the second branch flow path 32. The first branch flow path 31 and the second branch flow path 32 each correspond to the edge portion. Since the coolant has a small heat loss when flowing in the first branch flow path 31 and the second branch flow path 32, a heating effect of the first branch flow path 31 and the second branch flow path 32 on the edge portion is relatively good. Therefore, by the above arrangement, the heating effect on the edge portion can be improved to avoid the heat loss of the edge portion, enabling heating of the battery pack 2 corresponding to the heat exchange region by the coolant to be more balanced. In this way, a heating effect of the battery pack 2 corresponding to the heat exchange region can be improved, enhancing a cold-start capability of the battery assembly.

In some embodiments, among the plurality of heat exchange regions, the first branch flow path 31 in the at least one of the heat exchange regions is in communication with the water inflow path, In addition, the second branch flow path 32 in the at least one of the heat exchange regions is in communication with the water outflow path. Therefore, after the coolant enters the heat exchange region from the water inflow path, the coolant sequentially flows through the first branch flow path 31, the third branch flow path 33, and the second branch flow path 32 before entering the water outflow path. The coolant has a simple flow path, which can simplify an arrangement of the first branch flow path 31, the second branch flow path 32, and the third branch flow path 33 in the heat exchange region, improving a manufacturing efficiency of the heat exchange plate 1. Also, the residence duration of the coolant in the heat exchange region can be prolonged, increasing the utilization rate of the coolant.

It is worth mentioning that the first branch flow path 31 may be configured as a plurality of branch flow paths that are parallel to each other. As an example, there are two first branch flow paths 31. The two first branch flow paths 31 each have an end on one side in communication with an end of the third branch flow path 33, and the other end on the other side in communication with the water inflow path. Similarly, the second branch flow path 32 may be configured as a plurality of branch flow paths that are parallel to each other. As an example, there are two second branch flow paths 32. The two second branch flow paths 32 each have an end on one side in communication with the end of the third branch flow path 33, and the other end on the other side in communication with the water outflow path.

According to some embodiments of the present disclosure, as illustrated in FIG. 1 to FIG. 6, a plurality of heat exchange regions include a first heat exchange region, a second heat exchange region, a third heat exchange region, and a fourth heat exchange region. The first heat exchange region and the second heat exchange region are spaced apart from each other in the second direction. The first heat exchange region and the third heat exchange region are spaced apart from each other in the first direction. The fourth heat exchange region and the third heat exchange region are spaced apart from each other in the second direction. The fourth heat exchange region and the second heat exchange region are spaced apart from each other in the first direction. The water inlet 10 is disposed in the first heat exchange region. The water outlet 20 is disposed in the third heat exchange region.

It should be understood that the heat exchange plate 1 has a first heat exchange region, a second heat exchange region, a third heat exchange region, and a fourth heat exchange region that are distributed in a grid pattern. The plurality of heat exchange regions are compact and regular in layout, which can improve a utilization rate of the heat exchange plate 1, and also simplify a manufacturing process of the heat exchange plate 1, improving the manufacturing efficiency of the heat exchange plate 1.

In some embodiments, the water inlet 10 is disposed in the first heat exchange region and the water outlet 20 is disposed in the third heat exchange region. Therefore, the coolant may enter the water inflow path from the water inlet 10, perform heat exchange on the first heat exchange region, then flow back to the third heat exchange region through the water outflow path, and finally be discharged from the water outlet 20. In this case, the coolant may perform heat exchange on the first heat exchange region and the third heat exchange region. The coolant may enter the second heat exchange region through the water inflow path, perform heat exchange on the second heat exchange region, then flow back to the third heat exchange region through the water outflow path, and finally be discharged from the water outlet 20. In this case, the coolant may perform heat exchange on the first heat exchange region, the second heat exchange region, and the third heat exchange region. Alternatively, the coolant may enter the third heat exchange region through the water inflow path, perform heat exchange on the third heat exchange region, flow through the water outflow path and then be discharged from the water outlet 20. In this case, the coolant may perform heat exchange on the first heat exchange region and the third heat exchange region. Further, the coolant may enter the fourth heat exchange region through the water inflow path, perform heat exchange on the fourth heat exchange region, then flow back to the third heat exchange region through the water outflow path, and finally be discharged from the water outlet 20. In this case, the coolant may perform heat exchange on the first heat exchange region, the fourth heat exchange region, and the third heat exchange region. Therefore, by the above arrangement, the residence duration of the coolant in the heat exchange region can be prolonged, improving the utilization rate of the coolant.

According to some embodiments of the present disclosure, as illustrated in FIG. 1 to FIG. 6, the water inflow path includes a first water inflow path 41, a second water inflow path 42, and a third water inflow path 43. The first water inflow path 41 has an end in communication with the water inlet 10, and the other end in communication with a first branch flow path 31 and a second branch flow path 32 in the second heat exchange region. The first water inflow path 41 is at least partially disposed at a periphery of the first heat exchange region. Therefore, the coolant flows through the periphery of the first heat exchange region and then flows into the second heat exchange region. In addition, in the first direction, the coolant performs heat exchange on the second heat exchange region starting from two sides of the second heat exchange region. It should be understood that the heat loss of the coolant gradually increases as the coolant flows. Therefore, the coolant has a small heat loss when flowing through the first branch flow path 31 and the second branch flow path 32 in the second heat exchange region. In this case, the coolant has a good heating effect on the edge portion. Therefore, by the above arrangement, a heating effect on an edge portion of a battery pack 2 corresponding to the second heat exchange region can be improved, enhancing the cold-start capability of the battery assembly.

The second water inflow path 42 has an end in communication with the water inlet 10, and the other end in communication with a first branch flow path 31 and a second branch flow path 32 in the first heat exchange region. Therefore, in the first direction, the coolant performs heat exchange on the first heat exchange region starting from two sides of the first heat exchange region, which can improve a heating effect on an edge portion of a battery pack 2 corresponding to the first heat exchange region, enhancing the cold-start capability of the battery assembly.

The third water inflow path 43 has an end in communication with the water inlet 10, and the other end in communication with a first branch flow path 31 in the third heat exchange region. Therefore, after entering the third heat exchange region from the third water inflow path 43, the coolant sequentially flows through the first branch flow path 31, the third branch flow path 33, and the second branch flow path 32 before being discharged. The coolant has the simple flow path, which can simplify the arrangement of the first branch flow path 31, the second branch flow path 32, and the third branch flow path 33 in the third heat exchange region, and also prolong a residence duration of the coolant in the third heat exchange region, improving the utilization rate of the coolant. Additionally/alternatively, the other end of the third water inflow path 43 is in communication with a first branch flow path 31 and the at least one of the plurality of third branch flow paths 33 in the fourth heat exchange region. In this case, in the first direction, the coolant is divided into two parts to flow into the fourth heat exchange region: one part of the coolant starts to perform heat exchange on the fourth heat exchange region from a side of the fourth heat exchange region and is discharged when flowing to a middle part of the fourth heat exchange region; the other part of the coolant starts to perform heat exchange on the fourth heat exchange region from the middle part of the fourth heat exchange region and is discharged when flowing to another side of the fourth heat exchange region. Also, the third water inflow path 43 is arranged adjacent to the other side of the fourth heat exchange region. It should be understood that the heat loss of the coolant increases as the coolant flows. Therefore, by the above arrangement, that a branch flow path with a larger heat loss and a branch flow path with a smaller heat loss are arranged adjacent to each other in the fourth heat exchange region can be realized, to enable a temperature in the fourth heat exchange region to be more balanced, resulting in more balanced heat exchange for a battery pack 2 corresponding to the fourth heat exchange region.

In some embodiments, the third water inflow path 43 has the end in communication with the water inlet 10, and the other end in communication with the first branch flow path 31 in the third heat exchange region. In other embodiments, the third water inflow path 43 has the end in communication with the water inlet 10, and the other end in communication with the first branch flow path 31 and the at least one of the plurality of third branch flow paths 33 in the fourth heat exchange region. In further embodiments, the third water inflow path 43 has the end in communication with the water inlet 10, and the other end in communication with the first branch flow path 31 in the third heat exchange region, while the other end of the third water inflow path 43 is in communication with the first branch flow path 31 and the at least one of the plurality of third branch flow paths 33 in the fourth heat exchange region. The present disclosure is not limited in this regard.

According to some embodiments of the present disclosure, as illustrated in FIG. 1 to FIG. 6, the water outflow path includes a first water outflow path 51, a second water outflow path 52, a third water outflow path 53, and a fourth water outflow path 54. The first water outflow path 51 has an end in communication with at least one of the plurality of third branch flow paths 33 in the second heat exchange region, and the other end sequentially extending through a periphery of the fourth heat exchange region and a periphery of the third heat exchange region and in communication with the water outlet 20. Therefore, the coolant enters the first water outflow path 51 after flowing through the second heat exchange region. The coolant may perform heat exchange on an edge portion of the fourth heat exchange region and an edge portion of the third heat exchange region when flowing along the first water outflow path 51, which can improve the utilization rate of the coolant. Meanwhile, it should be understood that coolants from the plurality of branch flow paths in the second heat exchange region are collected into the first water outflow path 51. Therefore, a flow rate of the coolant in the first water outflow path 51 is greater than that in the branch flow path of the second heat exchange region. When the coolant flows in the first water outflow path 51 and performs heat exchange on the edge portion of the fourth heat exchange region and the edge portion of the third heat exchange region, the greater flow rate of the coolant in the first water outflow path 51 may significantly improve a heating effect on the edge portion of the fourth heat exchange region and the edge portion of the third heat exchange region, enabling heating of the plurality of battery packs 2 by the heat exchange plate 1 to be more balanced and thus enhancing the cold-start capability of the battery assembly.

The second water outflow path 52 has an end in communication with at least one of the plurality of third branch flow paths 33 in the first heat exchange region, and the other end sequentially extending through a periphery of the second heat exchange region and the periphery of the fourth heat exchange region and in communication with the first water outflow path 51. Therefore, the coolant enters the second water outflow path 52 after flowing through the first heat exchange region. The coolant may perform heat exchange on an edge portion of the second heat exchange region and the edge portion of the fourth heat exchange region when flowing in the second water outflow path 52, which can improve the utilization rate of the coolant. Meanwhile, the second water outflow path 52 is in communication with the first water outflow path 51 in the fourth heat exchange region. The coolant flowing in the second water outflow path 52 enters the first water outflow path 51 in the fourth heat exchange region and flows back to the water outlet 20 through the first water outflow path 51. In this way, extending the second water outflow path 52 to be in communication with the water outlet 20 can be avoided, shortening a layout path of the second water outflow path 52, and simplifying the manufacturing process of the heat exchange plate 1. Also, the manufacturing efficiency of the heat exchange plate 1 can be improved. In addition, coolants from the plurality of branch flow paths in the first heat exchange region are collected into the second water outflow path 52. Therefore, a flow rate of the coolant in the second water outflow path 52 is greater than that in the branch flow path of the first heat exchange region, which can improve a heating effect on edge portions of battery packs 2 corresponding to the second heat exchange region and the fourth heat exchange region, respectively.

The third water outflow path 53 has an end in communication with the second branch flow path 32 in the third heat exchange region, and the other end extending through the periphery of the third heat exchange region and in communication with the water outlet 20. Therefore, the coolant can perform heat exchange on the edge portion of the third heat exchange region when flowing in the third water outflow path 53, which can improve the utilization rate of the coolant. Meanwhile, coolants from the plurality of branch flow paths in the third heat exchange region are collected into the third water outflow path 53. Therefore, a flow rate of the coolant in the third water outflow path 53 is greater than that in the branch flow path of the third heat exchange region, which can improve a heating effect on an edge portion of a battery pack 2 corresponding to the third heat exchange region.

The fourth water outflow path 54 has an end in communication with a second branch flow path 32 and the at least one of the plurality of third branch flow paths 33 in the fourth heat exchange region, and the other end sequentially extending through the periphery of the fourth heat exchange region and the periphery of the third heat exchange region and in communication with the water outlet 20. Therefore, the coolant can perform heat exchange on the edge portion of the fourth heat exchange region and the edge portion of the third heat exchange region when flowing in the fourth water outflow path 54, which can improve the utilization rate of the coolant. Meanwhile, coolants from the plurality of branch flow paths in the fourth heat exchange region are collected into the fourth water outflow path 54. Therefore, a flow rate of the coolant in the fourth water outflow path 54 is greater than that in the branch flow path of the fourth heat exchange region, which can improve a heating effect on edge portions of battery packs 2 located in correspondence to the fourth heat exchange region and the third heat exchange region, respectively.

According to some embodiments of the present disclosure, as illustrated in FIG. 1 to FIG. 6, the water inlet 10 is disposed at a side of the first heat exchange region in the second direction. The water outlet 20 is disposed at a side of the third heat exchange region in the second direction. It should be understood that in the second direction, the water inlet 10 and the water outlet 20 are respectively disposed at an end of the first heat exchange region and an end of the third heat exchange region, which are both on the same side. In some embodiments, the water inlet 10 of the heat exchange plate 1 is in communication with a cooling device via a first pipe. In addition, the water outlet 20 of the heat exchange plate 1 is in communication with the cooling device via a second pipe. Therefore, by the above arrangement, a connection process between the heat exchange plate 1 and the cooling device can be simplified. In some embodiments, in the first direction, the water inlet 10 is disposed at a side of the first heat exchange region close to the third heat exchange region. The water outlet 20 is disposed at a side of the third heat exchange region close to the first heat exchange region. Therefore, when the heat exchange plate 1 is connected to the cooling device, the first pipe and the second pipe may be respectively connected to the water inlet 10 and the water outlet 20 more conveniently, further simplifying the connection process between the heat exchange plate 1 and the cooling device.

According to some embodiments of the present disclosure, as illustrated in FIG. 1 to FIG. 6, the third water inflow path 43 and the third water outflow path 53 are at least partially arranged between the first heat exchange region and the third heat exchange region. It should be understood that at least part of the third water inflow path 43 may be configured to perform heat exchange on an edge portion of the first heat exchange region, and at least part of the third water outflow path 53 may be configured to perform heat exchange on the edge portion of the third heat exchange region. Meanwhile, by the above arrangement, at least part of the third water inflow path 43 and at least part of the third water outflow path 53 can be arranged adjacent to each other, in such a manner that edge portions of battery packs 2 located respectively in correspondence to the first heat exchange region and the third heat exchange region, can achieve more balanced heat exchange.

According to some embodiments of the present disclosure, as illustrated in FIG. 1 to FIG. 6, a ratio of a quantity of branch flow paths in the first heat exchange region to a quantity of branch flow paths in the third heat exchange region is P, where 1.2≤P≤1.6. It should be understood that the first water outflow path 51, the third water outflow path 53, and the fourth water outflow path 54 all extend through the third heat exchange region and are in communication with the water outlet 20 in the third heat exchange region. Therefore, by the above arrangement, the first water outflow path 51, the third water outflow path 53, the fourth water outflow path 54, and branch flow paths in the third heat exchange region jointly cover the third heat exchange region, improving a utilization rate of the heat exchange plate 1 in the third heat exchange region.

According to some embodiments of the present disclosure, as illustrated in FIG. 1 to FIG. 6, a flow resistance of each of the branch flow paths in the first heat exchange region is R1, a flow resistance of each of the branch flow paths in the second heat exchange region is R2, a flow resistance of each of the branch flow paths in the third heat exchange region is R3, and a flow resistance of each of the branch flow paths in the fourth heat exchange region is R4, where R1>R3>R2>R4.

In some embodiments, flow rates of the coolant in the first heat exchange region, the second heat exchange region, the third heat exchange region, and the fourth heat exchange region are Q1, Q2, Q3, and Q4, respectively. The greater the flow resistance of the branch flow path, the faster the flow velocity of the coolant in the branch flow path. That is, the shorter the residence duration of the coolant in the branch flow path, the smaller the flow rate of the branch flow path. As the coolant flows, the heat loss of the coolant gradually increases. It should be understood that a time required for the coolant to enter in the first heat exchange region is t1, a time required for the coolant to enter the second heat exchange region is t2, a time required for the coolant to enter the third heat exchange region is t3, and a time required for the coolant to enter the fourth heat exchange region is t4. A comparison is made between the second heat exchange region and the third heat exchange region, a distance between the water inlet 10 and the third heat exchange region is smaller than that between the water inlet 10 and the second heat exchange region, and thus t3>t2. A comparison is made between the second heat exchange region and the fourth heat exchange region, a distance between the water inlet 10 and the second heat exchange region is equal to that between the water inlet 10 and the fourth heat exchange region, i.e., t2=t4. However, since the third heat exchange region and the fourth heat exchange region share a third water inlet 10, an efficiency of the coolant entering the second heat exchange region is higher than that of the coolant entering the fourth heat exchange region. Therefore, by the above arrangement, Q4>Q2>Q3>Q1 can be achieved, enabling heat exchange between the coolant and the respective battery packs 2 located in correspondence to the first heat exchange region, the second heat exchange region, the third heat exchange region, and the fourth heat exchange region to be more balanced.

According to some embodiments of the present disclosure, as illustrated in FIG. 1 to FIG. 6, a cross-sectional area of each of the branch flow paths in the first heat exchange region is S1, a cross-sectional area of each of the branch flow paths in the second heat exchange region is S2, a cross-sectional area of each of the branch flow paths in the third heat exchange region is S3, and a cross-sectional area of each of the branch flow paths in the fourth heat exchange region is S4, where S4>S2>S3>S1. It should be understood that a flow resistance of the coolant in the branch flow path may be controlled by disposing a baffle in the branch flow path, or by controlling a cross-sectional area of the branch flow path, which is not limited herein. Therefore, by setting S4>S2>S3>S1, R1>R3>R2>R4 can be achieved, realizing Q4>Q2>Q3>Q1.

A brief description of a vehicle according to the present disclosure is provided below.

The vehicle according to the present disclosure is provided with the battery assembly according to the above embodiments. Since the vehicle according to the present disclosure includes the battery assembly according to any of the above embodiments, a battery of the vehicle has excellent operation stability, which can ensure superior power performance of the vehicle.

In the description of the present disclosure, the description with reference to the terms "one embodiment," "some embodiments," "an example," "a specific example," or "some examples" etc., means that specific features, structures, materials, or characteristics described in conjunction with the embodiment(s) or example(s) are included in at least one embodiment or example of the present disclosure. The appearances of the above phrases in various places throughout this specification are not necessarily referring to the same embodiment or example. Further, the particular features, structures, materials, or characteristics described may be combined in any suitable manner in one or more embodiments or examples. In addition, different embodiments or examples described in the specification may be combined and integrated by those skilled in the art.

Although the embodiments of the present disclosure have been shown and described above, changes, modifications, substitutions, and alternations can be made to the above-mentioned embodiments.

## Claims

1. A battery assembly, comprising:
a plurality of battery packs (2) arranged sequentially in a first direction, each of the plurality of battery packs (2) being provided with a plurality of battery cells (60) arranged sequentially in a second direction; and
a heat exchange plate (1), wherein the heat exchange plate (1) has a water inlet (10), a water outlet (20), a water inflow path in communication with the water inlet (10), and a water outflow path in communication with the water outlet (20), and wherein the heat exchange plate (1) has heat exchange regions corresponding to the plurality of battery packs (2), a plurality of branch flow paths being arranged in each of the heat exchange regions and corresponding to each of the plurality of battery packs (2), and wherein each of the plurality of branch flow paths has an upstream end in communication with the water inflow path, and a downstream end in communication with the water outflow path.

2. The battery assembly according to claim 1, wherein, in one of the heat exchange regions, the plurality of branch flow paths each extend in the second direction and are arranged at intervals in the first direction, wherein:
a coolant in at least one of the plurality of branch flow paths flows in a first flow direction; and
a coolant in at least another one of the plurality of branch flow paths flows in a second flow direction opposite to the first flow direction.

3. The battery assembly according to claim 2, wherein a quantity of branch flow paths in which the coolant flows in the first flow direction is i1, and a quantity of branch flow paths in which the coolant flows in the second flow direction is i2, where 0.3≤i1/i2≤1.

4. The battery assembly according to claim 2 or 3, wherein the plurality of branch flow paths comprise:
a first branch flow path (31) and a second branch flow path (32) that are respectively disposed at two sides of the heat exchange regions in the first direction; and
a plurality of third branch flow paths (33) in communication with each other, the plurality of third branch flow paths being arranged between the first branch flow path (31) and the second branch flow path (32), wherein:
the first branch flow path (31) is in communication with the second branch flow path (32) via the plurality of third branch flow paths (33); and
in at least one of the heat exchange regions, the first branch flow path (31) is in communication with the water inflow path, and the second branch flow path (32) is in communication with the water outflow path; and/or each of the first branch flow path (31) and the second branch flow path (32) in at least one of the heat exchange regions is in communication with the water inflow path, and at least one of the plurality of third branch flow paths (33) in the at least one of the heat exchange regions is in communication with the water outflow path.

5. The battery assembly according to claim 4, wherein the heat exchange regions comprise:
a first heat exchange region;
a second heat exchange region spaced apart from the first heat exchange region in the second direction;
a third heat exchange region spaced apart from the the first heat exchange region in the first direction; and
a fourth heat exchange region spaced apart from the third heat exchange region in the second direction and spaced apart from the second heat exchange region in the first direction, wherein:
the water inlet (10) is formed in the first heat exchange region; and
the water outlet (20) is formed in the third heat exchange region.

6. The battery assembly according to claim 5, wherein the water inflow path comprises:
a first water inflow path (41) having an end in communication with the water inlet (10) and the other end in communication with a first branch flow path (31) and a second branch flow path (32) in the second heat exchange region, the first water inflow path (41) being at least partially disposed at a periphery of the first heat exchange region;
a second water inflow path (42) having an end in communication with the water inlet (10) and the other end in communication with a first branch flow path (31) and a second branch flow path (32) in the first heat exchange region; and
a third water inflow path (43) having an end in communication with the water inlet (10), wherein the other end of the third water inflow path (43) is in communication with a first branch flow path (31) in the third heat exchange region, and/or the other end of the third water inflow path (43) is in communication with a first branch flow path (31) and at least one of the plurality of third branch flow paths (33) in the fourth heat exchange region.

7. The battery assembly according to claim 6, wherein the water outflow path comprises:
a first water outflow path (51) having an end in communication with at least one of the plurality of third branch flow paths (33) in the second heat exchange region and the other end sequentially extending through a periphery of the fourth heat exchange region and a periphery of the third heat exchange region, the other end of the first water outflow path (51) being in communication with the water outlet (20);
a second water outflow path (52) having an end in communication with at least one of the plurality of third branch flow paths (33) in the first heat exchange region and the other end sequentially extending through a periphery of the second heat exchange region and the periphery of the fourth heat exchange region, the other end of the second water outflow path (52) being in communication with the first water outflow path (51);
a third water outflow path (53) having an end in communication with the second branch flow path (32) in the third heat exchange region and the other end extending through the periphery of the third heat exchange region, the other end of the third water outflow path (53) being in communication with the water outlet (20); and
a fourth water outflow path (54) having an end in communication with a second branch flow path (32) and the at least one of the plurality of third branch flow paths (33) in the fourth heat exchange region and the other end sequentially extending through the periphery of the fourth heat exchange region and the periphery of the third heat exchange region, the other end of the fourth water outflow path (54) being in communication with the water outlet (20).

8. The battery assembly according to claim 7, wherein:
the water inlet (10) is formed at a side of the first heat exchange region in the second direction; and
the water outlet (20) is formed at a side of the third heat exchange region in the second direction.

9. The battery assembly according to claim 8, wherein:
the third water inflow path (43) and the third water outflow path (53) are at least partially disposed between the first heat exchange region and the third heat exchange region.

10. The battery assembly according to claim 9, wherein:
a ratio of a quantity of branch flow paths in the first heat exchange region to a quantity of branch flow paths in the third heat exchange region is P, where 1.2≤P≤1.6.

11. The battery assembly according to claim 9 or 10, wherein:
a flow resistance of each of the branch flow paths in the first heat exchange region is R1, a flow resistance of each of the branch flow paths in the second heat exchange region is R2, a flow resistance of each of the branch flow paths in the third heat exchange region is R3, and a flow resistance of each of the branch flow paths in the fourth heat exchange region is R4, where R1>R3>R2>R4.

12. The battery assembly according to claim 11, wherein:
a cross-sectional area of each of the branch flow paths in the first heat exchange region is S1, a cross-sectional area of each of the branch flow paths in the second heat exchange region is S2, a cross-sectional area of each of the branch flow paths in the third heat exchange region is S3, and a cross-sectional area of each of the branch flow paths in the fourth heat exchange region is S4, where S4>S2>S3>S1.

13. A vehicle, comprising the battery assembly according to any one of claims 1 to 12.
